# EUROPEAN PATENT APPLICATION

(11) **EP 1 148 310 A1**
(43) Date of publication of application: **24.10.2001**
(21) Application number: 01201387.6
(22) Date of filing: 17.04.2001
(51) Int. Cl.: F26B 5/08, C11B 1/00

(54) **Method with centrifuging step using a centrifugal drier for the treatment of composite products comprising solid and liquid components**

(30) Priority: 21.04.2000 IT MI000911; 10.05.2000 IT MI001036
(71) Applicant: NUOVA M.A.I.P., MACCHINE AGRICOLE INDUSTRIALI PIERALISI S.P.A., Jesi (Ancona) (IT)
(72) Inventor: Pieralisi, Gennaro, Jesi (Ancona) (IT)
(74) Representative: Raimondi, Alfredo, Dott. Ing. Prof.

(57) **Abstract**

Method for the treatment of composite products essentially consisting of a solid component (3) and a liquid component (2), which comprises a step for centrifugal separation of the liquid component (2) and solid component (3) of said composite products, wherein said centrifugal separation is performed by means of a centrifugal drier (10).

## Description

The present invention relates to a method for the separation of a solid component from the liquid component of composite products such as the pastes which are supplied in processes for the extraction of oil from oleaginous products, or the pastes forming the residue of said treatments, sludges and the like, comprising a step for separation of the solid component from the liquid component performed by means of a centrifugal drier.

It is known that in numerous processes for the treatment of composite products comprising a solid and a liquid, it is required to perform the separation of said solid which must be as dry as possible so that it can be used in subsequent processes.

An example of this requirement consists of the residues from the processing of oleaginous products; at the end of the processes for extraction of oil from said oleaginous products such as olives and the like, the separation of the main components of the fruit is obtained, said components consisting of a high-quality liquid component (oil), a liquid component (water) for discarding and a solid residue which is more or less wet depending on the specific extraction method used.

Said solid residue (called "husk") essentially consists of:
- fruit pulp, essentially containing an oil residue not extracted during the first process;
- crushed stone (called "stone matter"); and
- water
and forms the raw material for further extraction processes performed in so-called husk-processing plants and intended to separate the various components of the husk so as to obtain:
- recovery of the oil left in the pulp at the end of the first process;
- recovery of the pulp which, mixed with further solid components, is used as fodder,
- recovery of the stone matter which may be used as fuel.

It is also known that said separation processes performed in husk-processing plants envisage preliminary drying of the husk by means of ovens or the like, extraction of the oil by means solvent and separation of the pulp from the stone matter for separate collection of the two solid residues.

Although serving their function, said methods have proved to be substantially unsuitable in those cases where the husk has a high moisture content since they require the processing of large quantities of husk with the consequent need to design the drying plants with excessively large dimensions resulting in a corresponding waste of energy due to the need to increase the heat to be supplied to the husk for drying thereof, which is in any case necessary for extraction of the oil using solvent.

Other examples of treatments where it is required to separate a solid component from the liquid component consist of the methods for extracting the water and oil from ground and kneaded olive paste or the methods for extracting the water from the sludges produced by a purification plant.

The technical problem which is posed, therefore, is that of providing a method for the treatment of the solid residue resulting from processes such as the extraction of oil from oleaginous products and the like, the treatment of the residues of said extraction operations and/or the treatment of the sludges from purification plants, which allows preliminary separation of the solid part from the liquid part so as to obtain a solid residue which is as dry as possible, achieving at the same time a reduction in the volume of treated solid residue, with a corresponding saving of energy, during the subsequent processing operations such as, for example, those for obtaining the husk oil, whether it be extracted using a physical method and/or using a chemical process which envisage drying of the solid residue and/or transportation/discharging of said residue.

These technical problems are solved according to the present invention by a method for the treatment of composite products, essentially consisting of a solid component and a liquid component, which comprises a step for centrifugal separation of the liquid component and solid component of said composite products, wherein said centrifugal separation is performed by means of a centrifugal drier.

Further details may be obtained from the following description of a non-limiting example of embodiment of the invention, provided with reference to the accompanying plates of drawings, in which:
- Figure 1 shows a diagram of the method according to the invention;
- Figure 2 shows a diagram of a second example of the method according to the invention;
- Figure 3 shows the diagram of a third example of the method with pre-processing of the husk;
- Figure 4 shows the diagram of a fourth example with pre-treatment of the husk;
- Figure 5 shows the diagram of a fifth example of the method with pre-processing of the husk and posttreatment of the separated solid and liquid components;
- Figure 6 shows the block diagram of a method for processing the paste of oleaginous products according to the present invention;
- Figure 7 shows the operating diagram of a plant for implementing the method according to Fig. 6.

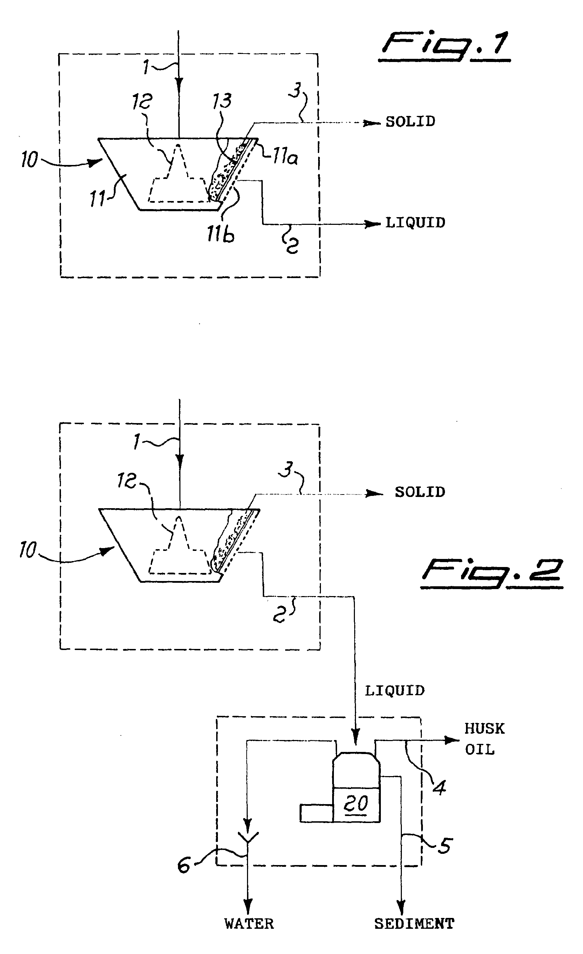

As shown in Fig. 1, the method according to the invention envisages feeding the composite product 1, resulting from the preceding processing step, to a centrifugal separation step performed by means of a centrifugal drier.

In its mode of implementation suitable for continuous operation, said centrifugal drier is also known by the name of basket centrifuge and is essentially composed of a vertical-axis, frustoconical, rotating container 11 which has its larger base arranged at the top and on the side surface 11a of which the outlet holes 11b for the liquid component 2 are formed. The rotating container 11 has, arranged inside it, a distribution accelerating device 12 and a multiple-layer filter 13 which in turn has a frustoconical form coaxial with the rotating container 11.

Said filter 13 comprises a first layer with predefined perforations, which defines the size of the solid which is able to pass through the said filter and a series of layers with openings increasing from the axis of rotation towards the side surface, forming a drain for the liquid which is conveyed towards one or more headers formed in the wall of the rotating container opposite said holes 11b for discharging the liquid.

With this design, the composite product 1, which is fed to the centrifuge 10 from above and parallel to the vertical axis of rotation, enters into contact with the distribution accelerator 12 which pushes it towards the bottom of the rotating container 11, and the rotation of the latter imparts a centrifugal force to the composite product which tends to be displaced outwards where it encounters the filter 13 which allows the liquid component 2 to pass through, continuing in the radial direction towards the associated outlet holes 11b, while it retains the solid component 3 which, owing to the breakdown of the forces in the inclined plane formed by the filter 13 itself, slides upwards until it emerges from the centrifuge 10.

Since the filter 13 may be formed with through-holes having a size of the order of hundredths of a millimetre, the method allows a liquid 2 which is very clean to be obtained, since it contains only sediments; correspondingly, the solid 3 which emerges from the basket centrifuge is considerably drier than that which can be obtained with the normal methods according to the prior art.

Said solid residue 2 may in fact be directly used as fuel for boilers, allowing in this way recovery of energy.

It is envisaged, moreover, that the centrifuge 10 may be made to operate at room temperature or at higher temperatures in order to favour better separation of the liquid from the solid.

Fig. 2 illustrates the method according to Fig. 1 in which the composite product 1 consists of residues (or "husk") resulting from the processing of olives. In this case, treatment of the liquid component 2 emerging from the basket centrifuge 10 is also envisaged, for extraction of the residual oil or so-called husk oil.

In this case the liquid component 2 is fed to a disk-type vertical centrifuge 20 from which the following are extracted: husk oil 4, sediments 5 and water 6 for discarding.

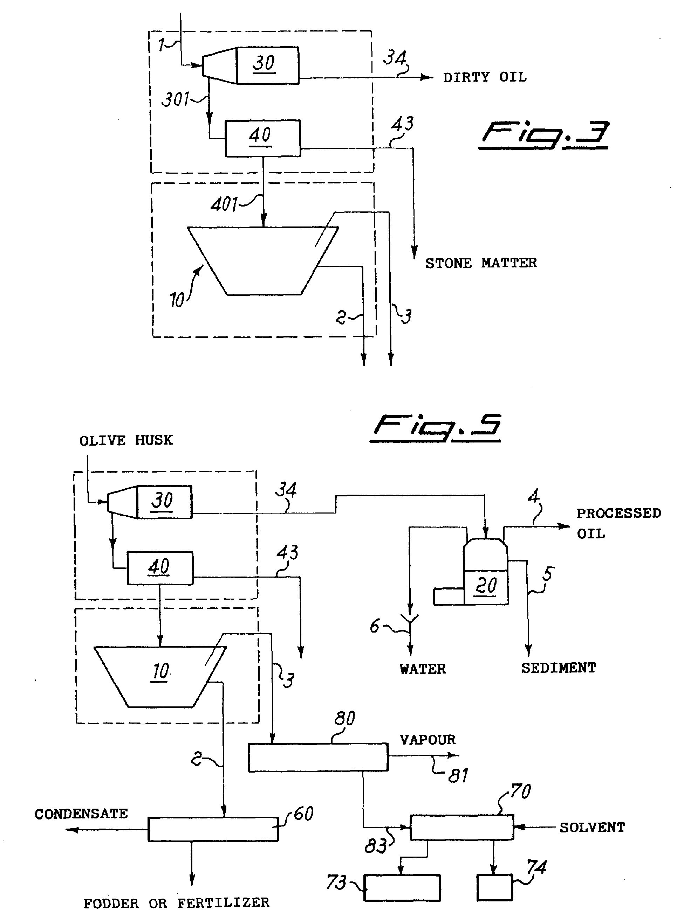

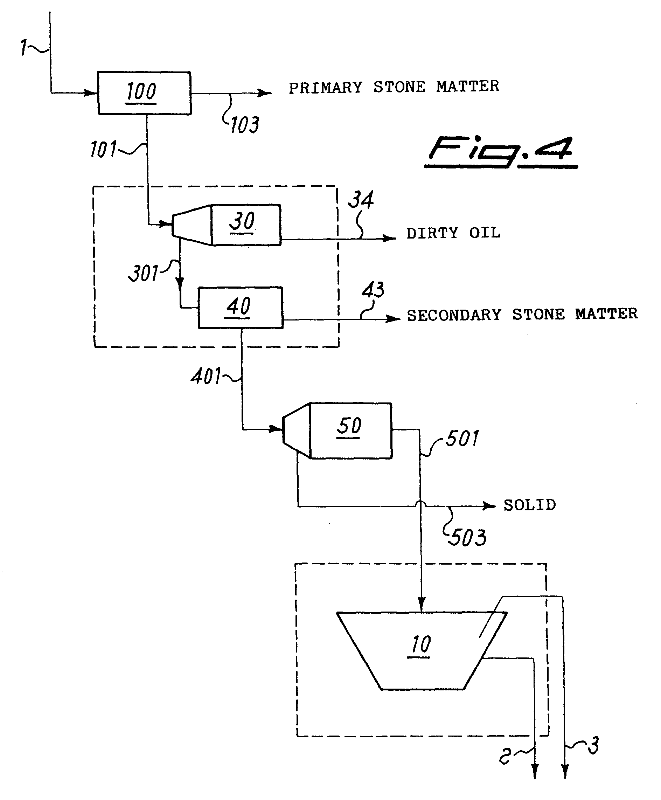

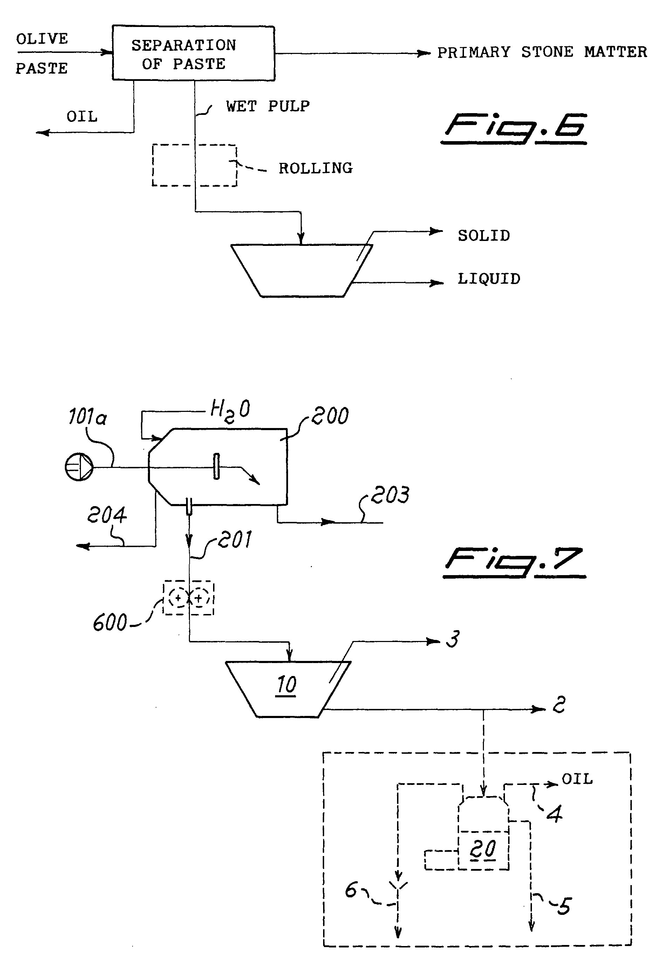

Fig. 3 illustrates a further mode of implementation of the method according to the invention in which pre-treatment of the husk 1 is envisaged.

In this case the husk 1 is fed to a horizontal centrifugal separator 30 from where a first component consisting of dirty oil 34 and a second component consisting of a paste comprising a solid residue 301 mixed with water are obtained; the solid residue 301 is fed to a screening machine 40 from where a solid residue 43 (stone matter) of predetermined size and a further liquid paste 401 which is fed to the basket centrifuge 10 for the already described separation into solid 3 and liquid 2 are extracted.

The advantage of the pre-treatment is twofold: on the one hand it reduces the quantity of stone matter which passes through the centrifuge 10, allowing the hourly production output thereof to be increased; on the other hand, it allows preliminary separation of stone matter of larger size which may be used in different applications.

Alternatively the screening device 40 could be replaced by a second decanter.

Fig. 4 shows the diagram of a variation of the method according to Fig. 3, in which the husk 1 is fed firstly to a screening machine 100 from where primary stone matter 103 with a large particle size as well as a paste 101 fed to the already described centrifuging step 30 and further screening step 40 are extracted.

The paste 401 from the screening machine 40 is fed to a second horizontal centrifugal separator (decanter) 50 from where a solid residue 503 and a fluid paste 501 which is fed to the basket centrifuge 10 for further separation into solid 3 and liquid 2 are extracted.

In this case it is possible to obtain the separation of two types of stone matter with a different particle size, suitable for different specific uses such as, for example, the formation of active carbon filters and combustion.

Fig. 5, finally, illustrates a complete method for obtaining two types of husk oil and two types of solid residue which are in turn used for different applications.

In greater detail, the first dirty oil 34, which is obtained from primary centrifuging 30, is conveyed to a disk-type vertical centrifuge 20 for separation of husk oil 4, sediments 5 and water 6 for discarding.

The solid residue obtained from the basket centrifuge 10 is conveyed to a drier 80 which produces vapour 81 and a suitably dry solid residue 83 for treatment with a solvent-based extraction process 70 from which further oil 74 and a dry and oil-free pulp 73 are obtained.

The liquid residue 2 which emerges from the basket centrifuge 10 is, on the other hand, conveyed to a concentrator 60 which produces a concentrate, which may be used as fodder or fertiliser, and a condensate (water).

It is envisaged, moreover, that all the separations obtained by means of the decanter may be performed with a two-phase or three-phase decanter, with or without the addition of water depending on the degree of wetness of the primary husk in order to facilitate separation of the solid which also undergoes washing before extraction.

Separation in the basket centrifuge may in turn be performed with the addition of water introduced into the incoming flow or sprayed by means of sprinkling along a generatrix of the conical surface of the filter.

Although described in relation to a continuous cycle, the method according to the invention could also be implemented in the form of a discontinuous cycle using corresponding centrifugal driers of the discontinuous type with a cylindrical shaped basket, which, being known per se, are not described in detail.

As illustrated in Fig. 6, the method according to the invention may also be used for extraction of oil and water from the pastes of oleaginous products such as olives and the like.

As is known, the primary aim of these methods is the extraction of the greatest possible quantity of oil from the paste which, once the oil has been extracted, may be conveyed in the form of a more or less wet residue to the subsequent processing steps partly already described further above.

In the example according to Figure 6, it is envisaged that the method for extracting oil from a paste of oleaginous products such as olives and the like comprises the steps of:
a) feeding an olive paste to a horizontal-axis centrifugal separator, also known by the name of decanter, in which the paste is separated into three components: oil, wet pulp containing an oil residue, and a solid residue formed by the crushed stone of the fruit (primary stone matter);
b) separate extraction of the said components from the decanter;
c) conveying of the extracted oil to a stage for separation thereof from the residual vegetable water; preferably this separation is performed by means of centrifuging in vertical-type machines;
d) conveying of the wet pulp extracted in step b) to a further stage for separation by means of a centrifugal drier, from where a dehydrated solid component (secondary stone matter) and a partially dehydrated pulp are newly extracted and then conveyed away for subsequent treatment.

It is therefore obvious how the method according to the invention differs from the conventional technique in that, although employing three-phase separation of the known type, a high quality of extracted oil is obtained since it does not come into contact with the washing water, and the extraction of the other components differs from the conventional technique in that the solid component is further separated into a dry residue (stone matter) and into a residue (pulp) extracted together with the water by means of centrifugal drier.

It is envisaged, moreover, that the method may comprise a step for rolling the wet pulp extracted from the first separator in order to free the particles of oil which are still imprisoned in the oil-producing cells and increase the amount of oil recovered and hence the overall efficiency, before conveying said pulp to the subsequent stage for separation by means of a centrifugal drier.

In order to implement the method according to the present invention, a plant provided in accordance with a preferred embodiment shown in Fig. 7 is envisaged.

In greater detail the plant comprises a decanter 200 of the so-called three-phase type or with separate extraction of the lighter component (= oil) 204, the wet pulp 201, extracted radially, and the solid residue (= crushed stone matter) 203.

The extracted oil 204 is fed to the subsequent stages for clarification operations known per se and therefore neither described nor illustrated.

The solid residue 203 extracted from the decanter 200 is essentially composed of dry crushed stone matter which may be stored and reused as fuel.

The wet pulp 201 is fed to a centrifugal drier 10 from where a very dry solid residue 3 and a dehydrated pulp 2 which is fed to the subsequent processing stages are newly extracted.

In a preferred embodiment it is envisaged that the pulp 201 is passed through a rolling mill 600 before being fed to a centrifugal drier 10.

As regards the treatment of the sludges produced by purification plants it is possible to apply directly the method according to Fig. 1, from which the following are extracted:
- a solid residue containing a reduced quantity of water;
- a slurry to be conveyed away for subsequent treatment.

## Claims

1. Method for the treatment of composite products essentially consisting of a solid component (3) and a liquid component (2), which comprises a step for centrifugal separation of the liquid component (2) and solid component (3) of said composite products, **characterized in that** said centrifugal separation is performed by means of a centrifugal drier (10).

2. Method according to Claim 1, **characterized in that** it is continuous.

3. Method according to Claim 1, **characterized in that** it is discontinuous.

4. Method according to Claim 1, **characterized in that** said centrifugal drier (10) has a vertical axis.

5. Method according to Claim 1, **characterized in that** said centrifugal drier has a horizontal axis.

6. Method according to Claim 1, **characterized in that** said composite product consists of the residues (1) from the processing of oleaginous products such as olives and the like.

7. Method according to Claim 6, **characterized in that** said liquid component (2) extracted by the basket centrifugal drier (10) is directly fed from a disk-type vertical centrifuge (20) for separation of a first husk oil.

8. Method according to Claim 6, **characterized in that** it envisages a step for pre-treatment of the husk (1).

9. Method according to Claim 8, **characterized in that** said pre-treatment comprises a first step (30) for centrifuging (30) and a second step for screening the solid residue (301) extracted by the said first centrifuging step in order to obtain stone matter (43).

10. Method according to Claim 9, **characterized in that** said centrifuging is performed by means of a decanter (10).

11. Method according to Claim 8, **characterized in that** it envisages an initial step (100) for screening the husk (1) before it is fed to the centrifuging step (30) in order to obtain primary stone matter (103).

12. Method according to Claim 9 or 11, **characterized in that** said pre-treatment comprises a second centrifuging step (50) downstream of the screening step (40) following the first centrifuging step (30).

13. Method according to Claim 12, **characterized in that** said second centrifuging step (50) is performed by means of a decanter.

14. Method according to Claim 6 or 9, **characterized in that** it comprises a step for treatment of the solid residue (2) separated by the centrifugal drier (10).

15. Method according to Claim 14, **characterized in that** said treatment of the solid residue comprises a step for drying (80) and a step for solvent-based extraction (70) of the husk oil (74).

16. Method according to Claim 6 or 9, **characterized in that** it comprises a step for treatment of the liquid component (2) extracted by the centrifugal drier (10).

17. Method according to Claim 16, **characterized in that** said treatment of the liquid component (2) comprises a step for concentration thereof.

18. Method according to Claim 1, **characterized in that** said composite product consists of a paste of oleaginous products such as olives and the like.

19. Method according to Claim 18, **characterized in that** it comprises a step for pre-treatment of the paste upstream of the step for centrifuging by means of a centrifugal drier.

20. Method according to Claim 19, **characterized in that** said pre-treatment step comprises a step for separation, by means of a decanter, of the components of the paste.

21. Method according to Claim 20, **characterized in that** the wet pulp extracted by the decanter is conveyed to a rolling step before feeding thereof to the step for centrifuging by means of the centrifugal drier.

22. Method according to Claim 1, **characterized in that** said composite product consists of sludges.
